# EUROPEAN PATENT APPLICATION

(11) **EP 4 787 113 A1**
(43) Date of publication of application: **05.08.2026**
(21) Application number: 26152356.7
(22) Date of filing: 16.01.2026
(51) Int. Cl.: G05D 1/648, A01B 69/04

(54) **PATH GENERATION METHOD, PATH GENERATION PROGRAM, AND PATH GENERATION SYSTEM**

(30) Priority: 29.01.2025 JP 2025012959
(71) Applicant: Yanmar Holdings Co., Ltd., Osaka-shi, Osaka (JP)
(72) Inventor: TAKAHASHI, Mamoru, Okayama (JP); MURAYAMA, Masaaki, Okayama (JP); NISHII, Yasuto, Okayama (JP); NISHINO, Mitsuya, Okayama (JP)
(74) Representative: Isarpatent

(57) **Abstract**

[Problem] To provide a path generation method, a path generation program, and a path generation system capable of generating a target path based on a reference line in an appropriate position. [Solution] An automatic traveling system 100 includes a setting processing unit 211 that sets the shape of a field, a work area located inside the field, and a headland area located inside the field and outside the work area, and a generation processing unit 212 that generates a target path along which to cause a work vehicle 10 to automatically travel, based on a reference line generated according to a predetermined operation, and the work area.

## Description

### TECHNICAL FIELD

The present invention relates to a path generation method, a path generation program, and a path generation system for generating a path (target path) along which to cause a work vehicle to automatically travel.

### BACKGROUND ART

There has been known a work vehicle that automatically travels along a preset target path in a field. For example, there is known a system that generates a reference line based on a user's operation, generates paths (target paths) parallel to the reference line, and causes a work vehicle to automatically travel along the target paths (see, for example, Patent Document 1).

### PRIOR ART DOCUMENT

### PATENT DOCUMENT

Patent Document 1: JP-A-2020-156329

### SUMMARY OF INVENTION

### TECHNICAL PROBLEM

However, in the conventional technique, a plurality of target paths are generated at predetermined intervals relative to the reference line regardless of whether in the entire field area or in a work area inside the field, thus resulting in a problem that a target path may also be generated in an area where the work vehicle does not need to travel.

It is an object of the present invention to provide a path generation method, a path generation program, and a path generation system capable of generating a target path based on a reference line in an appropriate position.

### SOLUTION TO PROBLEM

A path generation method according to the present invention includes setting the shape of a field, a work area located inside the field in which a work vehicle performs work, and a headland area located inside the field and outside the work area, and generating a target path along which to cause the work vehicle to automatically travel, based on a reference line generated according to a predetermined operation, and the work area.

A path generation program according to the present invention is a program for causing one or a plurality of processors to perform setting the shape of a field, a work area located inside the field in which a work vehicle performs work, and a headland area located inside the field and outside the work area, and generating a target path along which to cause the work vehicle to automatically travel, based on a reference line generated according to a predetermined operation, and the work area.

A path generation system according to the present invention includes a setting processing unit and a generation processing unit. The setting processing unit sets the shape of a field, a work area located inside the field in which a work vehicle performs work, and a headland area located inside the field and outside the work area. The generation processing unit generates a target path along which to cause the work vehicle to automatically travel, based on a reference line generated according to a predetermined operation, and the work area.

### ADVANTAGEOUS EFFECTS OF INVENTION

The present invention can provide a path generation method, a path generation program, and a path generation system capable of generating a target path based on a reference line in an appropriate position.

### BRIEF DESCRIPTION OF DRAWINGS

Fig. 1 is a block diagram showing a configuration of an automatic traveling system according to an embodiment of the present invention;
Fig. 2A is an external side view showing a configuration of a work vehicle according to the embodiment of the present invention;
Fig. 2B is an external plan view showing the configuration of the work vehicle according to the embodiment of the present invention;
Fig. 3 is a diagram showing an example of a target path set in a field according to the embodiment of the present invention;
Fig. 4 is a diagram showing an example of a menu screen displayed on an operation terminal according to the embodiment of the present invention;
Fig. 5A is a diagram showing an example of a method of setting work paths and a non-work area according to the embodiment of the present invention;
Fig. 5B is a diagram showing an example of a method of setting work paths and a non-work area according to the embodiment of the present invention;
Fig. 6 is a diagram showing an example of an operation screen displayed on the operation terminal according to the embodiment of the present invention;
Fig. 7A is a diagram for explaining a work path generation method according to the embodiment of the present invention;
Fig. 7B is a diagram for explaining a work path generation method according to the embodiment of the present invention;
Fig. 7C is a diagram for explaining a work path generation method according to the embodiment of the present invention;
Fig. 8 is a diagram showing an example of automatic traveling processing according to the embodiment of the present invention;
Fig. 9A is a diagram for explaining a method of changing a work area according to the embodiment of the present invention;
Fig. 9B is a diagram for explaining the method of changing the work area according to the embodiment of the present invention;
Fig. 10A is a diagram for explaining a method of changing the work area according to the embodiment of the present invention;
Fig. 10B is a diagram for explaining the method of changing the work area according to the embodiment of the present invention;
Fig. 11A is a diagram for explaining a method of changing the work area according to the embodiment of the present invention;
Fig. 11B is a diagram for explaining the method of changing the work area according to the embodiment of the present invention;
Fig. 12A is a diagram for explaining a method of changing the work area according to the embodiment of the present invention;
Fig. 12B is a diagram for explaining the method of changing the work area according to the embodiment of the present invention;
Fig. 13 is a flowchart showing an example of automatic traveling processing steps performed by the automatic traveling system according to the embodiment of the present invention;
Fig. 14 is a diagram showing an example of an operation screen displayed on the operation terminal according to the embodiment of the present invention;
Fig. 15A is a diagram showing a state in which the work vehicle is displaced from a target path according to another embodiment of the present invention;
Fig. 15B is a diagram showing an example of the corrected target path according to the other embodiment of the present invention;
Fig. 16A is a diagram showing a state in which the work vehicle is displaced from a target path according to another embodiment of the present invention;
Fig. 16B is a diagram showing an example of the corrected target path according to the other embodiment of the present invention;
Fig. 17A is a diagram showing a state in which the work vehicle is displaced from a target path according to another embodiment of the present invention;
Fig. 17B is a diagram showing an example of the corrected target path according to the other embodiment of the present invention;
Fig. 18A is a diagram showing a state in which the work vehicle is displaced from a target path according to another embodiment of the present invention;
Fig. 18B is a diagram showing an example of the corrected target path according to the other embodiment of the present invention;
Fig. 19 is a diagram showing an example of a target path correction method according to another embodiment of the present invention; and
Fig. 20 is a flowchart showing an example of automatic traveling processing steps performed by the automatic traveling system according to another embodiment of the present invention.

### DESCRIPTION OF EMBODIMENTS

The following embodiment is an example embodying the present invention and is not intended to limit the technical scope of the present invention.

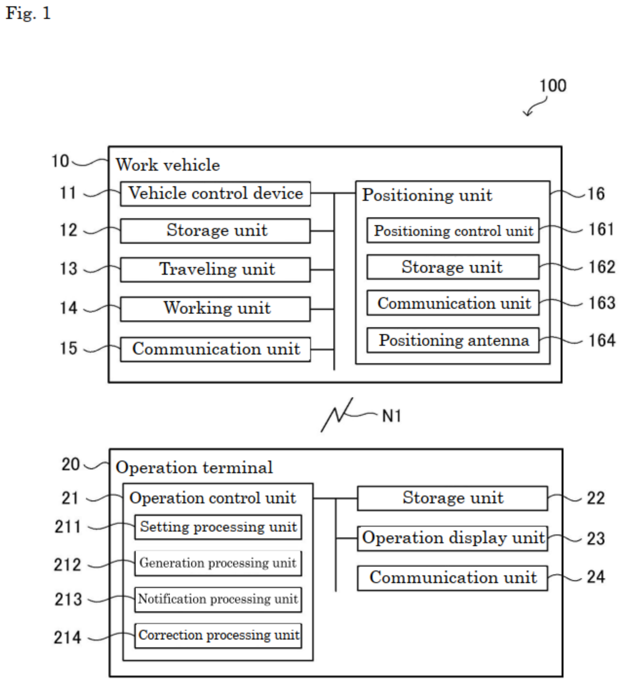

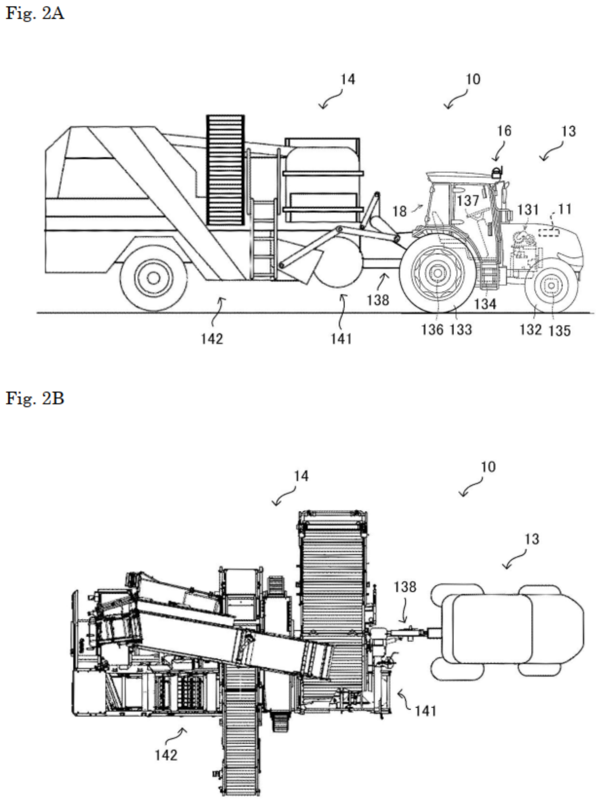

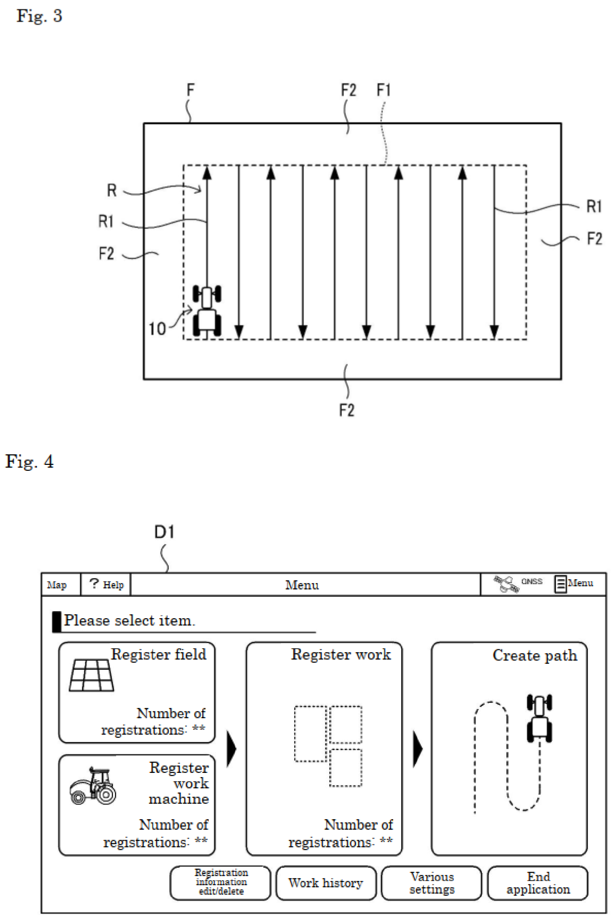

As shown in Figs. 1 and 2, an automatic traveling system 100 according to the embodiment of the present invention includes a work vehicle 10 and an operation terminal 20. The work vehicle 10 and the operation terminal 20 can communicate via a communication network N1. For example, the work vehicle 10 and the operation terminal 20 can communicate via a cellular network, a packet-switched network, or a wireless LAN. The automatic traveling system 100 is a system that can cause the work vehicle 10 to automatically travel in a field F (see Fig. 3).

A work vehicle of the present invention is a vehicle that performs specific work in the field F, such as a tractor, a combine, or a rice-planting machine. The present embodiment describes, as an example, a case where the work vehicle 10 is a vehicle (for example, a potato harvester) that harvests a crop (for example, potatoes) that is an object of work. For example, the work vehicle 10 is a towing vehicle in which a tractor travels while hauling a harvesting machine (working unit) that harvests potatoes.

The work vehicle 10 has a configuration capable of automatically traveling (autonomously traveling) along a preset target path R in the field F (see Fig. 3). For example, the work vehicle 10 can automatically travel along a plurality of parallel work paths R1 included in the target path R generated in advance for the field F, based on position information of the current position of the work vehicle 10 determined by a positioning unit 16.

The field F shown in Fig. 3 includes a work area F1 in which to cause the work vehicle 10 to perform work while causing the work vehicle 10 to automatically travel, and a headland area F2 outside the work area. For example, in the work area F1, the work vehicle 10 harvests potatoes while traveling forward and backward in parallel along the plurality of work paths R1. The target path R is not limited to a path shown in Fig. 3, and is appropriately set according to the shape of the field F, the type of work, and the like. The headland area F2 is, for example, an area around the work area F1, and is a movement area (turning area) for the work vehicle 10 to move (turn) between the work paths R1 while stopping the work. The work vehicle 10 manually travels in accordance with manual steering of a user (operator) in the headland area F2.

The operation terminal 20 causes various types of information on the work performed by the work vehicle 10 to be displayed, and receives an operation of the operator to perform processing according to the operation. For example, the operator operates the operation terminal 20 to set information necessary for automatic traveling and output an automatic traveling start instruction to the work vehicle 10. The operation terminal 20 causes information on the work status, the traveling status, and the like of the work vehicle 10 in automatic traveling to be displayed. The operator can ascertain the work status and the traveling status on the operation terminal 20.

The operation terminal 20 may be mountable (detachable) on (from) the work vehicle 10. In this case, the operator can get on the work vehicle 10 and operate the operation terminal 20. For example, by getting on the work vehicle 10 and operating the operation terminal 20, the operator can switch to manual steering to manually drive the work vehicle 10 or correct (change) the position of the target path R.

### [Work vehicle 10]

As shown in Figs. 1 and 2, the work vehicle 10 includes a vehicle control device 11, a storage unit 12, a traveling unit 13, a working unit 14, a communication unit 15, the positioning unit 16, and the like. The work vehicle 10 according to the present embodiment is a potato harvester that harvests potatoes while traveling in the field F. The vehicle control device 11 is electrically connected to the storage unit 12, the traveling unit 13, the working unit 14, the positioning unit 16, and the like. The vehicle control device 11 and the positioning unit 16 may be capable of wireless communication.

The communication unit 15 is a communication interface through which the work vehicle 10 is connected to the communication network N1 by wire or radio to perform data communication in compliance with a predetermined communication protocol with external devices such as the operation terminal 20 and a base station via the communication network N1. The work vehicle 10 can wirelessly communicate with the operation terminal 20 via the communication unit 15. The work vehicle 10 can perform wireless communication of various types of information including positioning information (correction information) with the base station via the communication unit 15.

The traveling unit 13 is a drive unit that causes the work vehicle 10 to travel. As shown in Fig. 2A, the traveling unit 13 includes an engine 131, front wheels 132, rear wheels 133, a transmission 134, a front axle 135, a rear axle 136, a steering wheel 137, and the like. The front wheels 132 and the rear wheels 133 are provided on the left and right of the work vehicle 10. The traveling unit 13 is not limited to a wheel type including the front wheels 132 and the rear wheels 133, and may be of a crawler type including crawlers provided on the left and right of the work vehicle 10.

The engine 131 is a drive source such as a diesel engine or a gasoline engine driven using fuel supplied to a fuel tank (not shown). The traveling unit 13 may include an electric motor as a drive source together with the engine 131 or instead of the engine 131. A generator (not shown) is connected to the engine 131. Power is supplied from the generator to electric components such as the vehicle control device 11, a battery, and the like provided in the work vehicle 10.

The battery is charged with power supplied from the generator. The battery supplies power to electric components such as the vehicle control device 11, the positioning unit 16, and the communication unit 15.

The driving force of the engine 131 is transmitted to the front wheels 132 via the transmission 134 and the front axle 135, and is transmitted to the rear wheels 133 via the transmission 134 and the rear axle 136. The driving force of the engine 131 is also transmitted to the working unit 14 via a PTO shaft 138. When the work vehicle 10 performs automatic traveling, the traveling unit 13 performs a traveling operation according to a command from the vehicle control device 11.

The working unit 14 includes a digging and conveying device 141, a sorting device 142, and the like. As shown in Figs. 2A and 2B, the working unit 14 is connected to the vehicle body (tractor) via the PTO shaft 138. The digging and conveying device 141 is disposed so as to be able to move up and down via a hydraulic cylinder (not shown), and is configured to be able to dig with a digging unit maintained at a constant height. The digging and conveying device 141 conveys a dug crop (potatoes) and earth and sand to the sorting device 142. The sorting device 142 includes a plurality of conveyors and is configured to remove earth and sand by vibration during conveyance. On the sorting device 142, chairs on which sorting workers sit are disposed on both sides of a central portion. The sorting workers sort the crop on the conveyors.

The steering wheel 137 is an operation unit operated by the operator or the vehicle control device 11. For example, in the traveling unit 13, the angle of the front wheels 132 is changed by a hydraulic power steering mechanism (not shown) or the like in accordance with an operation of the steering wheel 137 by the vehicle control device 11, to change the traveling direction of the work vehicle 10. When the operator performs a teaching operation to record the field F, the operator operates the steering wheel 137 to manually drive the work vehicle 10. When the work vehicle 10 is moved to the start point of each work path R1, the operator operates the steering wheel 137 (manually steers) to manually drive the work vehicle 10.

In addition to the steering wheel 137, the traveling unit 13 includes a shift lever, an accelerator, a brake, and the like (not shown) operated by the vehicle control device 11. In the traveling unit 13, a gear of the transmission 134 is switched to a forward gear, a reverse gear, or the like in accordance with an operation of the shift lever by the vehicle control device 11, and a traveling mode of the work vehicle 10 is switched to a forward movement, a backward movement, or the like. The vehicle control device 11 operates the accelerator to control the rotation speed of the engine 131. The vehicle control device 11 operates the brake to brake the rotation of the front wheels 132 and the rear wheels 133 using an electromagnetic brake.

The positioning unit 16 is a communication device including a positioning control unit 161, a storage unit 162, a communication unit 163, a positioning antenna 164, and the like. For example, as shown in Fig. 2A, the positioning unit 16 is provided on top of a cabin 18 that the operator gets in. The installation place of the positioning unit 16 is not limited to the cabin 18. Further, the positioning control unit 161, the storage unit 162, the communication unit 163, and the positioning antenna 164 of the positioning unit 16 may be separately disposed at different positions on the work vehicle 10. As described above, the battery is connected to the positioning unit 16, and the positioning unit 16 can operate even while the engine 131 is stopped. The positioning unit 16 may be substituted, for example, by a mobile phone terminal, a smartphone, a tablet terminal, a quantum compass, or the like.

The positioning control unit 161 is a computer system including one or a plurality of processors and storage memory such as non-volatile memory and RAM. The storage unit 162 is non-volatile memory or the like that stores a program for causing the positioning control unit 161 to perform positioning processing, and data such as positioning information and movement information. For example, the program is non-temporarily recorded on a computer-readable recording medium such as a CD or a DVD and is read by a given reading device (not shown) and stored in the storage unit 162. Note that the program may be downloaded from a server (not shown) to the positioning unit 16 via the communication network N1 and stored in the storage unit 162.

The communication unit 163 is a communication interface through which the positioning unit 16 is connected to the communication network N1 by wire or radio to perform data communication in compliance with a predetermined communication protocol with an external device such as a base station server via the communication network N1.

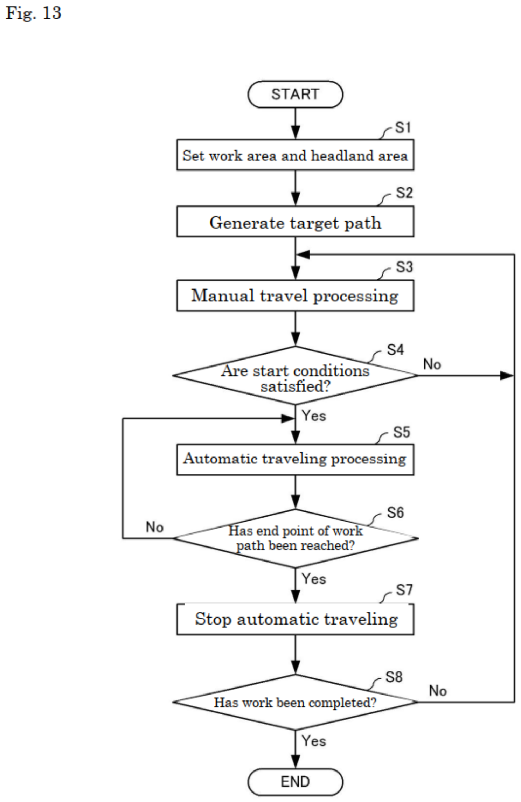

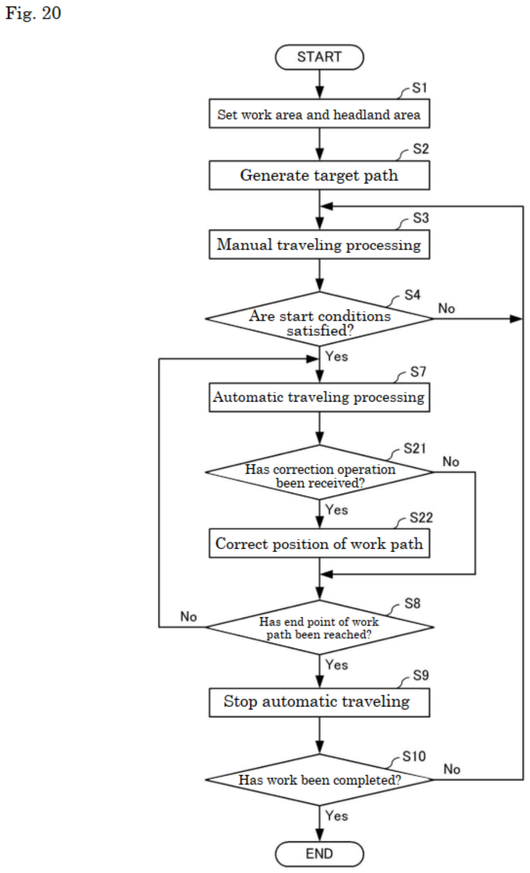

The storage unit 12 is a non-volatile storage unit such as a hard disk drive (HDD), a solid-state drive (SSD), or a flash memory that stores various types of information. The storage unit 12 stores control programs such as an automatic traveling program for causing the vehicle control device 11 to perform an automatic traveling processing (see Figs. 13 and 20). For example, the automatic traveling program is non-temporarily recorded on a computer-readable recording medium such as a CD or a DVD, and is read by a given reading device (not shown) and stored in the storage unit 12. Note that the automatic traveling program may be downloaded from a server (not shown) to the work vehicle 10 via the communication network N1 and stored in the storage unit 12. The storage unit 12 stores data of the target path R (path data) generated by the operation terminal 20.

The vehicle control device 11 includes control equipment such as a CPU, ROM, and RAM. The CPU is a processor that performs various types of arithmetic processing. The ROM is a non-volatile storage unit in which control programs such as a BIOS and an OS for causing the CPU to perform the various types of arithmetic processing are stored in advance. The RAM is a volatile or non-volatile storage unit that stores various types of information, and is used as a temporary storage memory (work area) for various types of processing performed by the CPU. The vehicle control device 11 controls the work vehicle 10 by executing, with the CPU, the various control programs stored in the ROM or the storage unit 12 in advance.

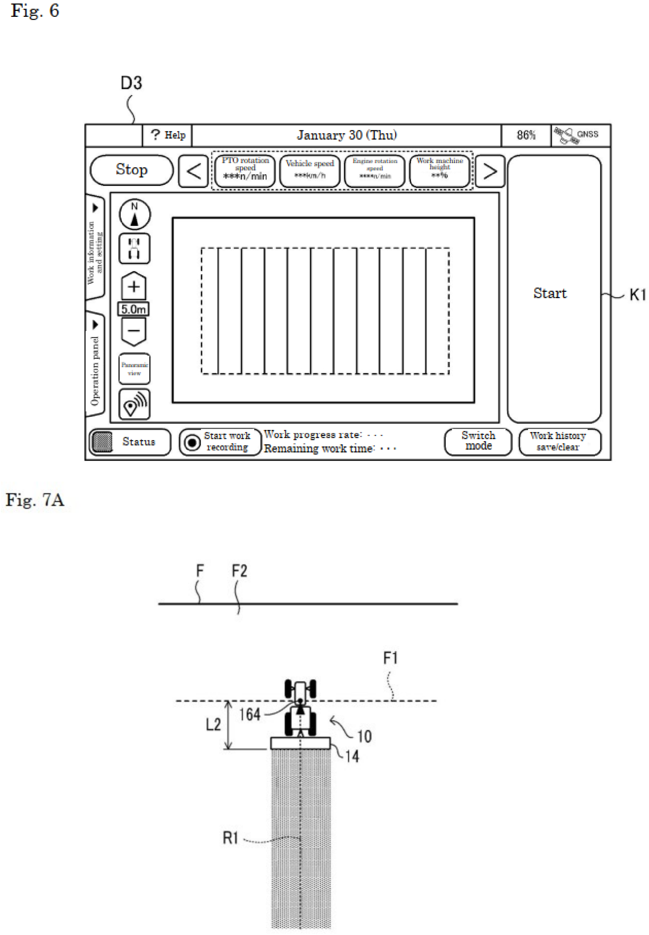

Specifically, the vehicle control device 11 causes the work vehicle 10 to automatically travel, based on position information indicating the position of the work vehicle 10 determined by the positioning control unit 161. For example, when automatic traveling start conditions are satisfied, and the operator presses a start button K1 (see Fig. 6) on the operation terminal 20, the operation terminal 20 outputs the automatic traveling start instruction to the work vehicle 10. The automatic traveling start conditions include, for example, that position determination accuracy is a predetermined value or more, the current position is within a predetermined distance from the work path R1, the direction (orientation) of the work vehicle 10 is within a predetermined angle with respect to the work path R1, and the like. Note that the automatic traveling start conditions are not limited to the above conditions.

When the automatic traveling start instruction is acquired from the operation terminal 20, the vehicle control device 11 causes the work vehicle 10 to start automatic traveling, based on the position information indicating the position of the work vehicle 10 determined by the positioning control unit 161. Consequently, the work vehicle 10 starts automatic traveling along the target path R (see Fig. 3), and starts work (for example, potato harvesting work) with the working unit 14. The target path R along which the work vehicle 10 travels is generated in advance by, for example, the operation terminal 20. The work vehicle 10 acquires the path data of the target path R from the operation terminal 20, and automatically travels along the target path R in the field F. In the example shown in Fig. 3, the work vehicle 10 performs work while automatically traveling straight along each work path R1 that is a straight path in the work area F1, and manually travels toward the next work path R1 according to the operator's manual steering in the headland area F2.

When an automatic traveling stop instruction is acquired from the operation terminal 20, the vehicle control device 11 causes the work vehicle 10 to stop automatic traveling. For example, when the operator presses a stop button on the operation terminal 20, the operation terminal 20 outputs the automatic traveling stop instruction to the work vehicle 10. When the automatic traveling stop instruction is acquired from the operation terminal 20, the vehicle control device 11 causes the work vehicle 10 to stop automatic traveling. Consequently, the work vehicle 10 stops automatic traveling and stops work with the working unit 14.

In the case where the operator gets on the work vehicle 10 and causes the work vehicle 10 to perform automatic traveling and work, the operation terminal 20 is installed in the cabin 18 of the work vehicle 10, and the operator can operate the operation terminal 20 in the cabin 18.

Although not shown, the work vehicle 10 may further include an obstacle sensor and a camera. The obstacle sensor is a sensor that detects obstacles in a predetermined detection area, using infrared rays, ultrasonic waves, or the like.

The camera is a digital camera that captures an image of a subject and outputs the captured image as digital image data. The camera continuously captures an image of a subject at a predetermined frame rate, generates a frame image of a predetermined resolution, and transmits the frame image to the vehicle control device 11. For example, the camera captures an image of a crop (potatoes) that is an object of work.

The vehicle control device 11 acquires measurement information from the obstacle sensor and acquires a captured image from the camera. When an obstacle is detected, the vehicle control device 11 causes the work vehicle 10 to travel, avoiding the obstacle, or to stop so as not to come into contact with the obstacle. The vehicle control device 11 outputs image data of the captured image acquired from the camera to the operation terminal 20. When the image data is acquired, the operation terminal 20 causes the captured image to be displayed on an operation screen.

### [Operation terminal 20]

As shown in Fig. 1, the operation terminal 20 is an information processing apparatus including an operation control unit 21, a storage unit 22, an operation display unit 23, a communication unit 24, and the like. The operation terminal 20 may be a mobile terminal such as a tablet terminal or a smartphone.

The communication unit 24 is a communication interface through which the operation terminal 20 is connected to the communication network N1 by wire or radio to perform data communication in compliance with a predetermined communication protocol with external devices such as one or a plurality of work vehicles 10 via the communication network N1.

The operation display unit 23 is a user interface including a display unit such as a liquid crystal display or an organic EL display that displays various types of information, and an operation unit such as a touch panel, a mouse, or a keyboard that receives operations. The operator can operate the operation unit on an operation screen displayed on the display unit to perform operations to set and register various types of information (such as work vehicle information, field information, and work information described below). Further, the operator can operate the operation unit to provide the automatic traveling start instruction, the automatic traveling stop instruction, an instruction to correct the target path R, and the like to the work vehicle 10. Furthermore, the operator can check the traveling status, the work status, and the like of the work vehicle 10 automatically traveling along the target path R in the field F, using information displayed on the operation terminal 20.

The storage unit 22 is a non-volatile storage unit such as an HDD, an SSD, or a flash memory that stores various types of information. The storage unit 22 stores control programs such as an automatic traveling program for causing the operation control unit 21 to perform the automatic traveling processing (see Figs. 13 and 20). For example, the automatic traveling program is non-temporarily recorded on a computer-readable recording medium such as a CD or a DVD, and is read by a given reading device (not shown) and stored in the storage unit 22. Note that the automatic traveling program may be downloaded from a server (not shown) to the operation terminal 20 via the communication network N1 and stored in the storage unit 22.

The operation control unit 21 includes control equipment such as a CPU, ROM, and RAM. The CPU is a processor that performs various types of arithmetic processing. The ROM is a non-volatile storage unit in which control programs such as a BIOS and an OS for causing the CPU to perform the various types of arithmetic processing are stored in advance. The RAM is a volatile or non-volatile storage unit that stores various types of information, and is used as a temporary storage memory (work area) for various types of processing performed by the CPU. The operation control unit 21 controls the operation terminal 20 by executing, with the CPU, the various control programs stored in the ROM or the storage unit 22 in advance.

Specifically, as shown in Fig. 1, the operation control unit 21 includes various processing units such as a setting processing unit 211, a generation processing unit 212, a notification processing unit 213, and a correction processing unit 214. The operation control unit 21 functions as the various processing units by performing, with the CPU, various types of processing according to the control programs. Some or all of the processing units may be configured with an electronic circuit. Note that the control programs may be programs for causing a plurality of processors to function as the processing units.

The setting processing unit 211 sets various types of setting information for causing the work vehicle 10 to perform automatic traveling. Specifically, the setting processing unit 211 sets information on the work vehicle 10 (hereinafter referred to as work vehicle information). When the operator performs operations on the operation terminal 20 to register information such as the type (model) of the work vehicle 10, the position where the positioning antenna 164 is mounted on the work vehicle 10, the type of work machine, the size and shape of the work machine, the position of the work machine relative to the work vehicle 10, the vehicle speed and the engine speed during work of the work vehicle 10, and the vehicle speed and the engine speed during turning of the work vehicle 10, the setting processing unit 211 sets the information.

For example, the setting processing unit 211 causes the operation display unit 23 to display a menu screen D1 shown in Fig. 4. The operator selects, for example, "register work machine" on the menu screen D1 to register work machine information on the work machine. In the present embodiment, work machine information on the potato harvester as the work machine coupled to the tractor is registered.

Further, the setting processing unit 211 sets information on the field F (hereinafter referred to as field information). The setting processing unit 211 sets the shape (outline) of the field F, the work area F1 located inside the field F, and the headland area F2 located inside the field F and outside the work area F1. The work area F1 is, for example, an area in which to cause the work vehicle 10 to perform work while causing the work vehicle 10 to automatically travel. The headland area F2 is an area (headland area) in which to cause the work vehicle 10 to move with the work stopped. Specifically, the setting processing unit 211 sets information such as the position and shape of the field F, the work area F1 and the headland area F2, and work directions, according to the operator's operations on the operation terminal 20. The work directions mean directions in which to cause the work vehicle 10 to travel while performing work with the working unit 14 in the work area F1. For example, the operator selects "register field" on the menu screen D1 to register the field information.

Information of the position and shape of the field F can be automatically acquired, for example, when the operator gets on and drives the work vehicle 10 around the field F along its outer periphery once to record changes in position information of the positioning antenna 164 at that time. Alternatively, the position and shape of the field F may be acquired based on a polygon obtained by the operator operating the operation terminal 20 with a map displayed on the operation terminal 20 and designating a plurality of points on the map. The area specified by the acquired position and shape of the field F is an area where it is possible to cause the work vehicle 10 to travel (a travel area). The work area F1 and the headland area F2 are set in the travel area.

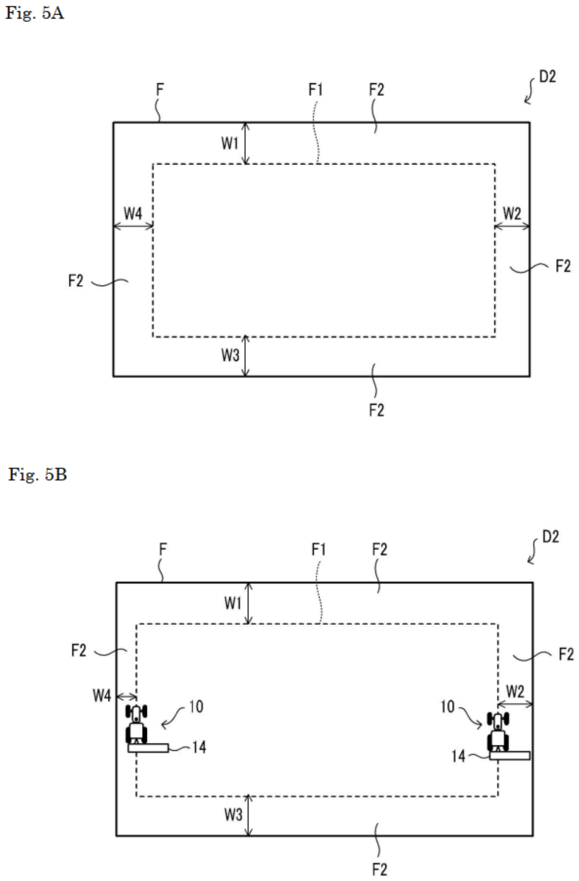

Here, a specific example of a method of setting the work area F1 and the headland area F2 will be described. Fig. 5A is an example of a setting screen D2 displayed on the operation terminal 20. On the setting screen D2, the outline of the field F set by the operator is displayed. On the setting screen D2, the operator enters predetermined distances W1 to W4 inward from the outer sides of the field F. The operator may select "W1" on the map of the field F on the setting screen D2 to enter the distance, or may enter the distance in a separate entry field. The operator can set the distances W1 to W4 for the corresponding sides. Based on the distances W1 to W4 entered by the operator, the setting processing unit 211 sets the work area F1 inside the field F and sets the headland area F2 outside the work area F1. Thus, the setting processing unit 211 can set the work area F1 to a desired extent, and can set the position of the target path R according to the extent of the work area F1. The setting processing unit 211 can set the work area F1 according to the operator's operations.

As another embodiment, the setting processing unit 211 may set the extent of the work area F1, based on the size of the work vehicle 10 or information on the working unit 14. For example, as shown in Fig. 5B, in the case where the working unit 14 is a work machine (offset work machine) provided, shifted to the right (or to the left) from the body center of the work vehicle 10, the setting processing unit 211 sets the distances W1 to W4 based on the offset position of the working unit 14 to set the work area F1. Thus, the setting processing unit 211 may set the work area F1, based on the work vehicle information or the work machine information registered in advance.

Further, the setting processing unit 211 sets detailed information on how to perform work (hereinafter referred to as work information). The setting processing unit 211 is configured to be able to set, as the work information, the presence or absence of cooperative work between an unmanned work vehicle 10 and a manned work vehicle 10, the width of the headland, the width of a non-cultivated land, and the like. For example, the operator selects "register work" on the menu screen D1 to register the work information.

The generation processing unit 212 generates the target path R that is a path along which to cause the work vehicle 10 to automatically travel, based on the set pieces of information. The operator selects "create path" on the menu screen D1 (see Fig. 4) to issue an instruction to generate the target path R. Specifically, the generation processing unit 212 generates a reference line L1 according to a predetermined operation, and generates the target path R based on the reference line L1 and the work area F1. For example, the generation processing unit 212 generates the reference line L1 according to the operator's operation, and generates the target path R including straight paths (the work paths R1) parallel to the reference line L1. The reference line L1 may be a straight line or a curve.

The generation processing unit 212 generates the target path R based on a predetermined path generation mode. Specifically, the generation processing unit 212 generates the target path R based on any one of a first path generation mode in which the target path R is generated based on the reference line L1 passing through two reference points (a point A and a point B) set at desired positions in the field F according to the operator's operation, a second path generation mode in which the target path R is generated based on the reference line L1 passing through a reference point (point A) set at the position (for example, current position) of the work vehicle 10 in the field F and extending in the direction of the orientation of the work vehicle 10 (vehicle orientation), a third path generation mode in which the target path R is generated based on the reference line L1 passing through a reference point (point A) set at the position (for example, current position) of the work vehicle 10 in the field F and extending in the direction of a set azimuth angle (set angle) set according to the operator's operation, a fourth path generation mode in which the target path R is generated based on the reference line L1 with an outer side selected by the operator from among the outer sides of the field F set as the reference line L1, and a fifth path generation mode in which the target path R is generated based on the reference line L1 with an outer side selected by the operator from among the outer sides of the work area F1 set as the reference line L1. The operator may be able to select any one of the first to fifth path generation modes on an operation screen.

Upon generating the reference line L1, the generation processing unit 212 generates the target path R including the work paths R1 parallel to the reference line L1. The target path R may include a plurality of work paths R1 or a single work path R1. The target path R shown in Fig. 3 includes a plurality of work paths R1 parallel to the reference line L1 and equally spaced.

The generation processing unit 212 sets the ends (the start point and end point) of each work path R1 in the field F. Specifically, the generation processing unit 212 sets the start point and end point of each work path R1 on the outer sides of the work area F1. For example, in the example shown in Fig. 3, the start point of each work path R1 along which the traveling direction is upward is set on the lower side of the work area F1, and the end point is set on the upper side of the work area F1. The start point of each work path R1 along which the traveling direction is downward is set on the upper side of the work area F1, and the end point is set on the lower side of the work area F1. This allows the work vehicle 10 to automatically travel from the lower side to the upper side (or from the upper side to the lower side) along each work path R1 in the work area F1.

After generating the target path R, the generation processing unit 212 transfers path data of the target path R to the work vehicle 10. Note that the generation processing unit 212 can generate and store a plurality of target paths R according to the type of work for a single field F.

The path data transferred from the operation terminal 20 is stored in the storage unit 12 of the work vehicle 10. Consequently, the work vehicle 10 can automatically travel along the target path R while determining the current position of the work vehicle 10 with the positioning unit 16.

The work vehicle 10 according to the present embodiment travels in the field F of a substantially rectangular shape as shown in Fig. 3. The work vehicle 10 is configured to be able to automatically travel when its current position is located in the field F, and is configured to be unable to automatically travel when its current position is located outside the field F (on a public road or the like). Further, the work vehicle 10 is configured to be able to automatically travel when the automatic traveling start conditions are satisfied.

In the case where the automatic traveling start conditions are satisfied, when the operator presses the start button K1 on an operation screen D3 (see Fig. 6) of the operation terminal 20 to give the automatic traveling start instruction, the work vehicle 10 starts automatic traveling and work (for example, potato harvesting work).

When the automatic traveling of the work vehicle 10 is permitted, the vehicle control device 11 causes the work vehicle 10 to automatically travel along the work paths R1, based on the target path R. While the work vehicle 10 is automatically traveling, the vehicle control device 11 periodically outputs various measured values (the PTO rotation speed, the vehicle speed, the position information, and the like) to the operation terminal 20.

When the work vehicle 10 is automatically traveling, the operation control unit 21 causes map information including the field F, the target path R, and the current position of the work vehicle 10 to be displayed on the operation screen D3 (see Fig. 6). In addition to the map information, the operation control unit 21 causes function icons such as a magnification icon to change the display magnification of the map and an orientation icon to change the orientation of the map, and display icons (notification icons) to display the current statuses (measured values or the like) of items such as the driving status, the vehicle speed status, and the position status of the work vehicle 10 to be displayed on the operation screen D3.

In the case where the vehicle control device 11 causes the work vehicle 10 to automatically travel along each work path R1, when the work vehicle 10 reaches the end point of each work path R1, the vehicle control device 11 stops the automatic traveling (stops the vehicle). Here, when the vehicle control device 11 sets a control point used to control the traveling position of the work vehicle 10 at the position of the positioning antenna 164 (position determination point), an unworked area may occur in the work area F1. For example, as shown in Fig. 7A, when the work vehicle 10 performs work while automatically traveling along the work path R1, and the position of the positioning antenna 164 (control point) reaches the end point of the work path R1, the vehicle control device 11 stops the automatic traveling. In this case, the working unit 14 does not reach the upper side of the work area F1, leaving the area within the distance L2 between the working unit 14 and the upper side as an unworked area.

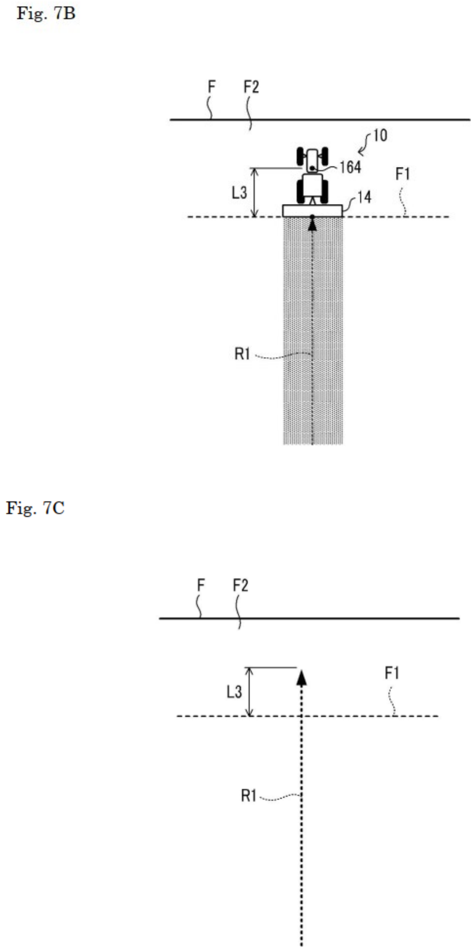

To solve the above problem, the vehicle control device 11 sets the control point at the working unit 14. In this case, as shown in Fig. 7B, the work vehicle 10 performs work while automatically traveling along the work path R1, and at the timing when the position of the working unit 14 reaches the end point of the work path R1, the vehicle control device 11 stops the automatic traveling. Thus, the working unit 14 reaches the upper side of the work area F1. This can prevent the occurrence of an unworked area, ensuring that work is performed in the entire work area F1. The vehicle control device 11 can register the distance L3 between the positioning antenna 164 and the working unit 14 in advance to control the traveling position of the work vehicle 10 with the position of the working unit 14 as the control point, based on the position of the positioning antenna 164 (position determination point) and the distance L3.

As another embodiment to solve the above problem, the generation processing unit 212 may set the end point of each work path R1 in the headland area F2 to extend the work path R1 itself. Specifically, the generation processing unit 212 extends each work path R1 into the headland area F2 by a length corresponding to the distance L3 between the positioning antenna 164 and the working unit 14 (for example, the distance L3). In this case, the work vehicle 10 performs work while automatically traveling along each work path R1, and at the timing when the position of the positioning antenna 164 (position determination point) reaches the end point of the work path R1, the vehicle control device 11 stops the automatic traveling. Thus, the working unit 14 reaches the upper side of the work area F1. This can prevent the occurrence of an unworked area, ensuring that work is performed in the entire work area F1.

The operator may be able to select in advance whether to set the control point of the work vehicle 10 at the working unit 14 (see Fig. 7B) or at the positioning antenna 164 (see Fig. 7C).

When the work vehicle 10 reaches the end point of each work path R1, the vehicle control device 11 may stop the automatic traveling (stop the vehicle), or may switch to manual traveling and maintain traveling (stop the automatic traveling or switch from an automatic traveling mode to a manual traveling mode). Further, when the work vehicle 10 reaches the end point of each work path R1, the vehicle control device 11 may switch to manual traveling and cause the working unit 14 to automatically move to a non-working position (for example, ascend to a non-working height). Alternatively, when the work vehicle 10 reaches the end point of each work path R1, the vehicle control device 11 may stop the automatic traveling (stop the vehicle), and then cause the work path R1 to be extended by a predetermined distance by the operator's operation and resume automatic traveling so as to perform work in the headland area F2. When the vehicle control device 11 causes the work vehicle 10 to automatically travel along an extended portion of the work path R1, the vehicle control device 11 may cause the work vehicle 10 to automatically travel at a predetermined vehicle speed or less with safety taken into consideration.

Here, the notification processing unit 213 may make notification to the outside when the work vehicle 10 stops. For example, a beep or a voice is output from the operation terminal 20 or the work vehicle 10 to the outside before the work vehicle 10 stops at the end point of each work path R1 (or at the time of stopping) or before the work vehicle 10 reaches the end point of each work path R1 and switches to manual traveling (or at the time of switching). This ensures that the operator ascertains that the work vehicle 10 stops or switches to manual traveling.

### [Method of starting automatic traveling]

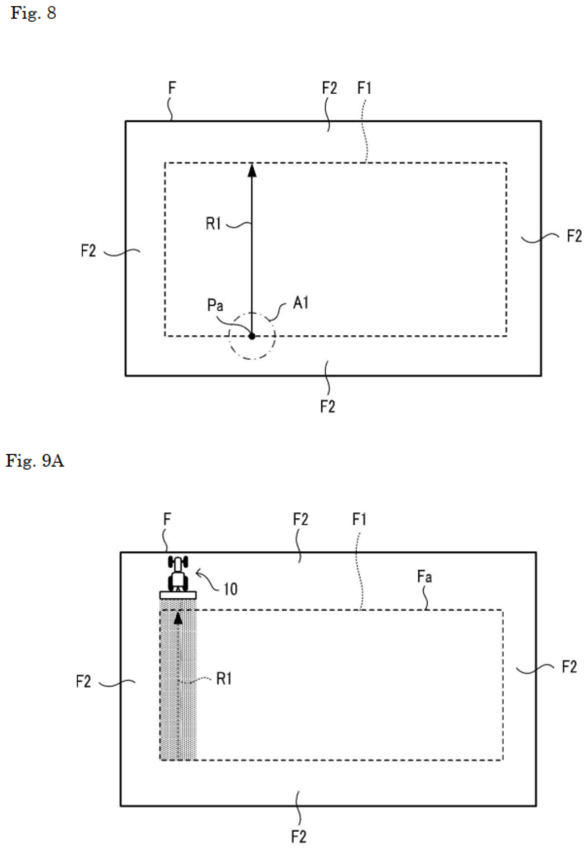

As another embodiment to cause the work vehicle 10 to start automatic traveling, the vehicle control device 11 may cause the work vehicle 10 to start automatic traveling when the work vehicle 10 or the working unit 14 reaches an end (start point) of the target path R (work path R1) set based on the work area F1 or comes within a predetermined distance from the end, and the automatic traveling start conditions are satisfied. For example, Fig. 8 shows a predetermined area A1 set with reference to the start point Pa of the work path R1. In the case where the automatic traveling start conditions are satisfied with the position of the control point (the positioning antenna 164 or the working unit 14) of the work vehicle 10 located in the predetermined area A1, the vehicle control device 11 permits automatic traveling of the work vehicle 10. In addition, when the position of the control point of the work vehicle 10 becomes located in the predetermined area A1, the vehicle control device 11 may cause the working unit 14 to automatically move to a working position (descend to a working height), and start driving of the working unit 14 and start automatic traveling. Alternatively, the vehicle control device 11 may start automatic traveling when the vehicle control device 11 receives a start operation (an operation of pressing the start button K1 and an operation to lower the working unit 14) from the operator with the position of the control point of the work vehicle 10 located in the predetermined area A1.

Alternatively, when the work vehicle 10 or the working unit 14 enters the predetermined area A1, the vehicle control device 11 may cause the work vehicle 10 to automatically travel to the end (start point) of the target path R (work path R1). When the work vehicle 10 reaches the end and the automatic traveling start conditions are satisfied, the vehicle control device 11 may cause the work vehicle 10 to start automatic traveling along the work path R1. Thus, the vehicle control device 11 may cause the work vehicle 10 to automatically travel to the start point of the work path R1 when the control point of the work vehicle 10 enters the predetermined area A1. When the work vehicle 10 reaches the start point of the work path R1, the vehicle control device 11 may cause the working unit 14 to automatically descend, and start the driving of the working unit 14 and start automatic traveling. Alternatively, when the work vehicle 10 enters the predetermined area A1, the vehicle control device 11 may cause the work vehicle 10 to automatically travel to the start point of the work path R1 in the case where the deviation between the orientation of the work path R1 and the vehicle orientation is within a threshold value, or the deviation between the orientation of the work path R1 and the orientation of a line connecting the vehicle position and the start point of the work path R1 is within a threshold value.

### [Method of changing work area F1]

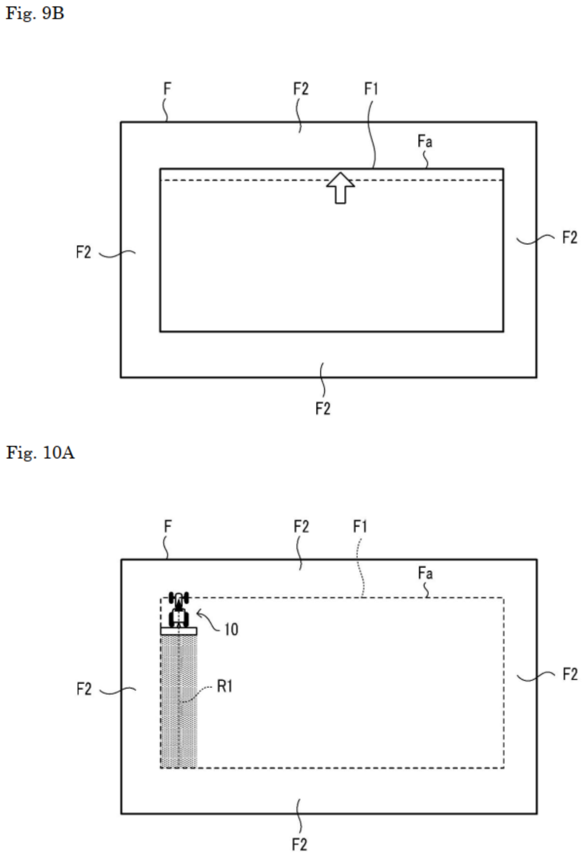

The setting processing unit 211 may be able to change the extent of the work area F1, based on information of a work history with the work vehicle 10 (previous work information). For example, as shown in Fig. 9A, in the case where the work vehicle 10 has automatically traveled along the work path R1 and reached the end point of the work path R1, and then the operator has caused the work vehicle 10 to travel on an extension of the work path R1 by manual steering and caused the work vehicle 10 to continue work, the setting processing unit 211 extends the work area F1 based on the position where the manual traveling has been stopped. Fig. 9B shows the extended work area F1. For example, the setting processing unit 211 extends the work area F1 by translating the upper side Fa of the work area F1 to a position passing through the position where the work vehicle 10 has been stopped on the extension of the work path R1.

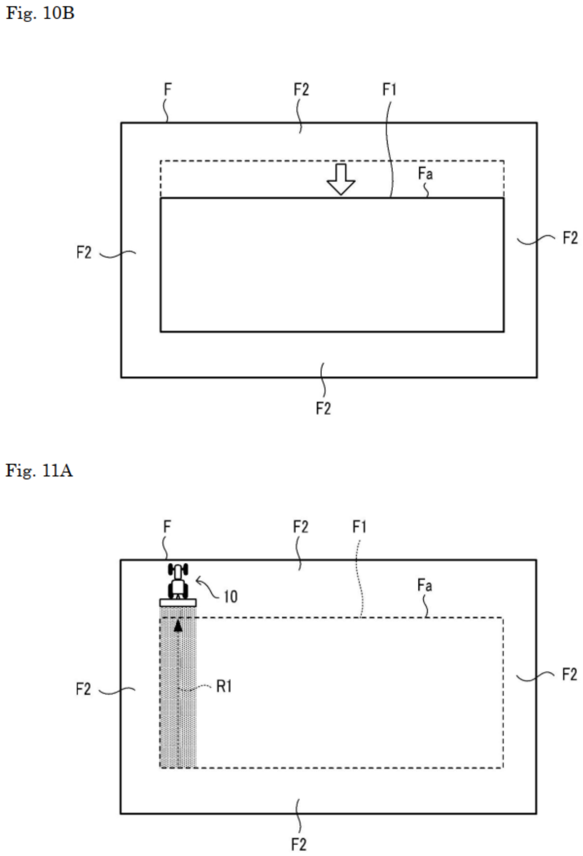

As another example, as shown in Fig. 10A, in the case where the work vehicle 10 has automatically traveled along the work path R1, and the operator has stopped the automatic traveling (stopped the vehicle) or switched to manual traveling before the end point of the work path R1 is reached, the setting processing unit 211 reduces the work area F1 based on the position where the work vehicle 10 has been stopped. Fig. 10B shows the reduced work area F1. For example, the setting processing unit 211 reduces the work area F1 by translating the upper side Fa of the work area F1 to a position passing through the position where the work vehicle 10 has been stopped on the work path R1.

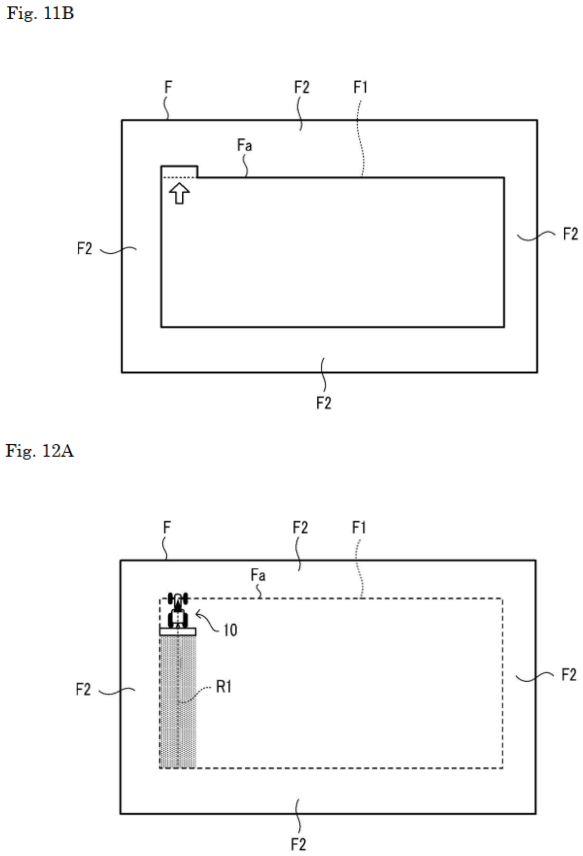

In the examples shown in Figs. 9 and 10, the work area F1 is changed by translating one side of the work area F1. As another embodiment, the setting processing unit 211 may change the work area F1 by translating part of a side of the work area F1. For example, in the case where, as shown in Fig. 11A, the work vehicle 10 has traveled beyond the end point of the work path R1 while performing work, as shown in Fig. 11B, the setting processing unit 211 extends only a portion of the upper side Fa of the work area F1 corresponding to the working width of the work path R1.

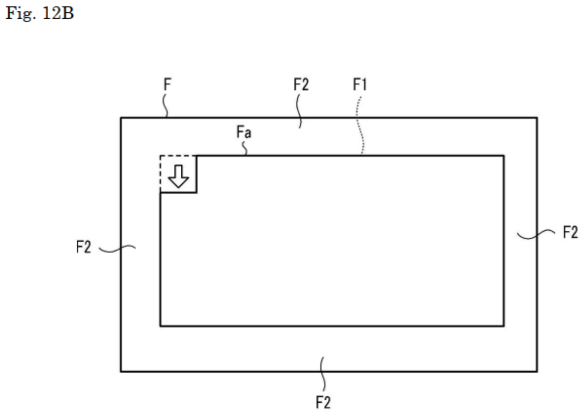

For example, in the case where, as shown in Fig. 12A, automatic traveling has been stopped or switched to manual traveling before the work vehicle 10 reaches the end point of the work path R1, as shown in Fig. 12B, the setting processing unit 211 reduces only a portion of the upper side Fa of the work area F1 corresponding to the working width of the work path R1.

Whether or not the setting processing unit 211 changes the extent of the work area F1 based on the work history information in the field F may be able to be set in advance by the operator before work (a first setting method). Alternatively, whether or not the setting processing unit 211 changes the extent of the work area F1 may be able to be selected by the operator when the timing at which the extent of the work area F1 can be changed has come during work (during automatic traveling) (such as when the work vehicle 10 has gone beyond the end point of the work path R1 or when the work vehicle 10 has been stopped short of the end point of the work path R1) (a second setting method).

In the case where the second setting method is used, once the operator selects "not to change the extent of the work area F1", the setting processing unit 211 may be set so as not to make an inquiry about a change in the work area F1 after that.

Further, whether the setting processing unit 211 changes the extent of the entire work area F1 (see Figs. 9 and 10) or changes the extent of part of the work area F1 (see Figs. 11 and 12) may be able to be selected by the operator.

The operation terminal 20 may be able to access a website of an agricultural support service (an agricultural support site) provided by a server (not shown) via the communication network N1. In this case, the operation terminal 20 can function as an operation terminal of the server when the operation control unit 21 executes a browser program. Then, the server includes the above-described processing units and performs the pieces of processing.

### [Automatic traveling processing]

Hereinafter, with reference to Fig. 13, an example of the automatic traveling processing performed by the automatic traveling system 100 will be described.

The present invention can be considered as an invention of an automatic traveling method to perform one or more steps included in the automatic traveling processing. One or more steps included in the automatic traveling processing described here may be omitted as appropriate. Steps in the automatic traveling processing may be performed in a different order as long as the same operational effect is achieved. Furthermore, here, a case where the vehicle control device 11 and the operation control unit 21 perform the steps in the automatic traveling processing will be described as an example. An automatic traveling method in which one or a plurality of processors perform the steps in the automatic traveling processing in a distributed manner is also considered as another embodiment.

### <Step S1>

In step S1, the operation control unit 21 sets the work area F1 and the headland area F2. Specifically, the operation control unit 21 sets information such as the position and shape of the field F, the work area F1 and the headland area F2, and work directions according to the operator's operations (see Fig. 3). For example, when the operator enters the distances W1 to W4 from the outer sides of the field F as shown in Fig. 5A, the operation control unit 21 sets the work area F1 and the headland area F2 based on the distances W1 to W4. Alternatively, as shown in Fig. 5B, the operation control unit 21 sets the distances W1 to W4 based on the size of the work vehicle 10 and the type, size, and position (offset position or the like) of the working unit 14, and sets the work area F1 and the headland area F2 based on the set distances W1 to W4.

### <Step S2>

In step S2, the operation control unit 21 generates the target path R for automatic traveling. Specifically, the operation control unit 21 generates the target path R along which to cause the work vehicle 10 to automatically travel, based on the pieces of information set in step S1. Specifically, the operation control unit 21 generates the reference line L1 according to the operator's operation, and generates the target path R including the work paths R1 parallel to the reference line L1. For example, the operation control unit 21 generates the target path R based on any one of the first to fifth path generation modes described above.

The operation control unit 21 sets the ends (the start point and end point) of each work path R1 so that an area of work performed by the work vehicle 10 falls within the work area F1. For example, as shown in Fig. 3, the operation control unit 21 generates the target path R so that an end of each work path R1 is located on the upper side or the lower side of the work area F1. As another embodiment, as shown in Fig. 7C, in the case where the control point used to control the traveling position of the work vehicle 10 is set at the position of the positioning antenna 164 (position determination point), the operation control unit 21 may set an end (end point) of each work path R1 in the headland area F2.

### <Step S3>

In step S3, the vehicle control device 11 causes the work vehicle 10 to manually travel according to the operator's manual steering. For example, the operator causes the work vehicle 10 to manually travel to an end (start point) of one of the work paths R1 or into the predetermined area A1 (see Fig. 8) around the end. Specifically, the operator causes the work vehicle 10 to manually travel until the control point of the work vehicle 10 (the position of the positioning antenna 164 or the working unit 14) is located in the predetermined area A1.

### <Step S4>

In step S4, the vehicle control device 11 determines whether or not the work vehicle 10 satisfies the automatic traveling start conditions. When the work vehicle 10 satisfies the automatic traveling start conditions (S4: Yes), the vehicle control device 11 causes the process to proceed to step S5. On the other hand, when the work vehicle 10 does not satisfy the automatic traveling start conditions (S4: No), the vehicle control device 11 returns the process to step S3. The vehicle control device 11 continues manual traveling processing until the work vehicle 10 satisfies the automatic traveling start conditions.

### <Step S5>

In step S5, the vehicle control device 11 starts automatic traveling processing. Specifically, the vehicle control device 11 causes the work vehicle 10 to start automatic traveling (automatic straight traveling) along the work path R1 included in the target path R (see Fig. 3). In addition, the vehicle control device 11 causes work with the working unit 14 to be started in the work area F1.

### <Step S6>

In step S6, the vehicle control device 11 determines whether or not the work vehicle 10 has reached the end point of the work path R1. When the vehicle control device 11 determines that the work vehicle 10 has reached the end point of the work path R1 (S6: Yes), the vehicle control device 11 causes the process to proceed to step S7. On the other hand, when the vehicle control device 11 determines that the work vehicle 10 has not reached the end point of the work path R1 (S6: No), the vehicle control device 11 returns the process to step S5. The vehicle control device 11 continues the automatic traveling processing until the work vehicle 10 reaches the end point of the work path R1.

### <Step S7>

In step S7, the vehicle control device 11 causes the work vehicle 10 to stop the automatic traveling. In addition, the vehicle control device 11 causes the working unit 14 to stop the work. For example, when the work vehicle 10 has reached the end point of the work path R1, the vehicle control device 11 causes the work vehicle 10 to stop and causes the working unit 14 to ascend to the non-working height and stops the driving thereof.

### <Step S8>

In step S8, the vehicle control device 11 determines whether or not the work vehicle 10 has completed the work. For example, when the operator has performed an operation to end the automatic traveling, the vehicle control device 11 determines that the work has been completed. As another embodiment, the vehicle control device 11 may determine that the work has been completed when the work vehicle 10 has reached a preset work end position. When the vehicle control device 11 determines that the work vehicle 10 has completed the work (S8: Yes), the vehicle control device 11 completes the automatic traveling processing. On the other hand, when the vehicle control device 11 determines that the work vehicle 10 has not completed the work (S8: No), the vehicle control device 11 returns the process to step S3. Returning to step S3, the vehicle control device 11 causes the work vehicle 10 to manually travel toward the next work path R1 according to the operator's manual steering.

The operation control unit 21 and the vehicle control device 11 repeatedly perform the above-described process until the work vehicle 10 completes the work (S8: No). Thus, the automatic traveling system 100 performs the automatic traveling processing.

As described above, the automatic traveling system 100 according to the present embodiment performs setting the shape of the field F, the work area F1 located inside the field F in which the work vehicle 10 performs work, and the headland area F2 located inside the field F and outside the work area F1, and generating the target path R along which to cause the work vehicle 10 to automatically travel, based on the reference line L1 generated according to a predetermined operation, and the work area F1.

For example, the automatic traveling system 100 generates the work paths R1 parallel to the reference line L1 in the work area F1. The automatic traveling system 100 causes the work vehicle 10 to start automatic traveling when the work vehicle 10 or the working unit 14 reaches the start point of each work path R1, and causes the work vehicle 10 to stop the automatic traveling when the work vehicle 10 or the working unit 14 reaches the end point of the work path R1.

According to the above configuration, the target path R based on the reference line L1 can be generated in an appropriate position for the field F. An area intended by the operator can be set as the work area F1 in which to perform automatic traveling and work. Consequently, the workability and safety of the work vehicle 10 can be improved.

### [Other embodiments]

The present invention is not limited to the above-described embodiments. Other embodiments of the present invention will be described below.

It may be desired to correct (change) the position of the target path R while causing the work vehicle 10 to automatically travel along the target path R. For example, in the case where the work vehicle 10, while automatically traveling along one of the work paths R1, is displaced laterally relative to the work path R1, it may be desired to move the work path R1 to the traveling position of the work vehicle 10. Therefore, as another embodiment, the correction processing unit 214 of the operation control unit 21 may be configured to move the position of a specific one of the work paths R1 when a correction operation (movement operation) to laterally move the position of the target path R is received while the work vehicle 10 is automatically traveling along one of the work paths R1. Specifically, when the correction operation is received, the correction processing unit 214 moves only the work path R1 along which the work vehicle 10 is traveling.

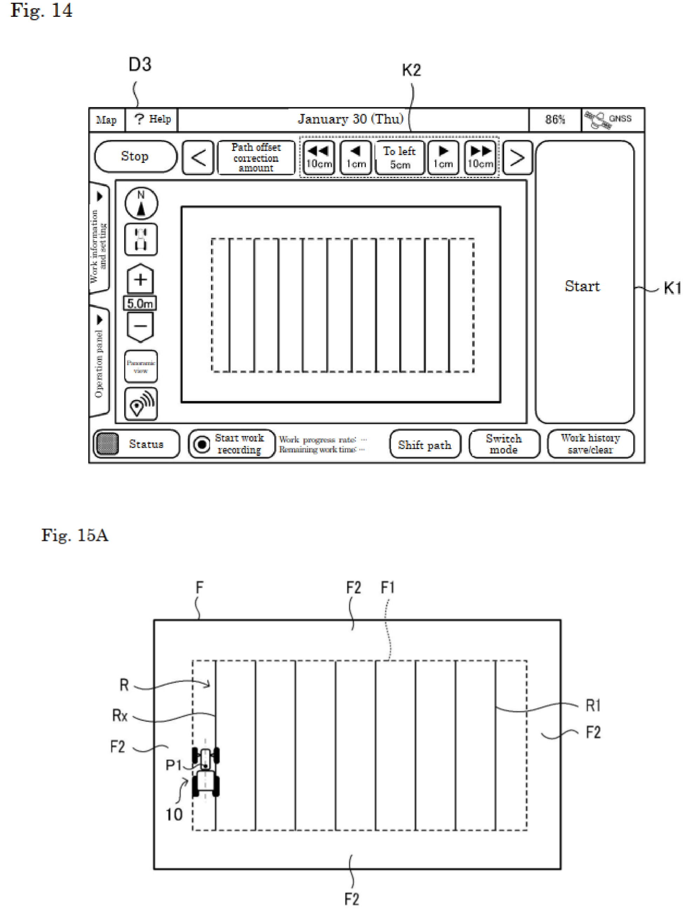

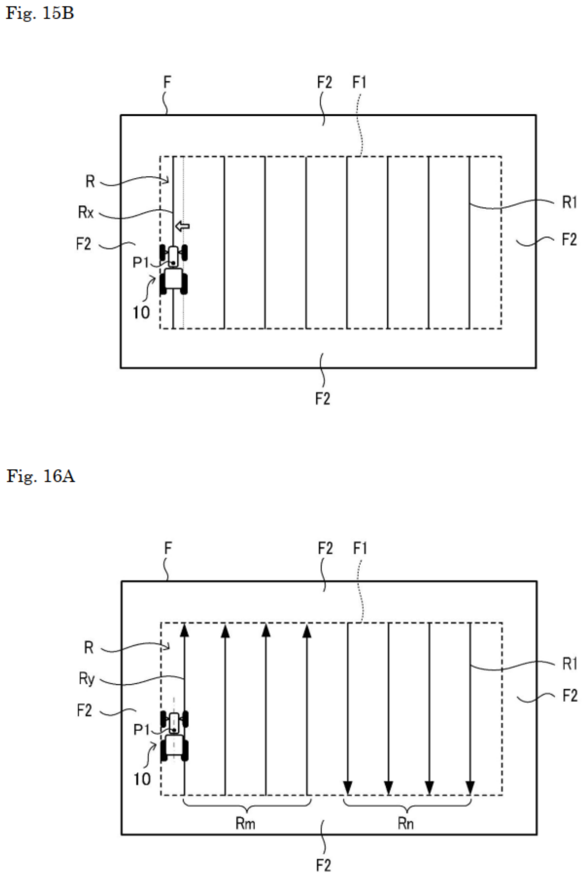

For example, as shown in Fig. 15A, in the case where the work vehicle 10, while automatically traveling along a specific work path Rx among the work paths R1, is traveling in a position deviated to the left from the work path Rx, the operator presses a path offset button K2 on the operation screen D3 (see Fig. 14). Then, as shown in Fig. 15B, the correction processing unit 214 moves only the work path Rx among the work paths R1. The operator can set the amount of movement (amount of correction) of the work path Rx with the path offset button K2. In Fig. 14, the amount of correction is set to "5 cm to the left", and thus the correction processing unit 214 moves the work path Rx to the left by 5 cm. The operator can set the amount of correction "5 cm to the left" by pressing the left arrow "1 cm" five times, for example. Consequently, the vehicle control device 11 causes the work vehicle 10 to automatically travel along the corrected work path Rx (see Fig. 15B).

The correction processing unit 214 corrects, among the plurality of work paths R1, the position of only the work path Rx closest to the current position P1 of the work vehicle 10 when the correction operation is received. The correction processing unit 214 does not correct the position of the other work paths R1 except the work path Rx.

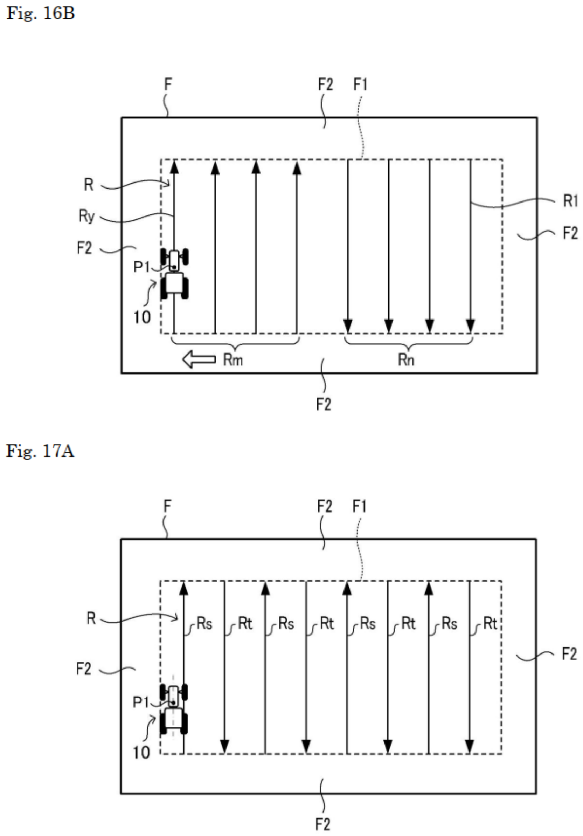

As another embodiment, the correction processing unit 214 may correct, among the plurality of work paths R1, the position of the work paths R1 associated with traveling direction information of the same direction as the traveling direction of the work vehicle 10 when the correction operation is received. For example, in the target path R shown in Fig. 16A, work paths Rm are associated with traveling direction information of a direction from below upward, and work paths Rn are associated with traveling direction information of a direction from above downward. In the case where the traveling direction of the work vehicle 10 when the correction operation is received is from below upward, the correction processing unit 214 corrects the position of only the work paths Rm. Here, as shown in Fig. 16B, the correction processing unit 214 shifts (translates) the position of all the work paths Rm to the left, and does not correct the position of the work paths Rn.

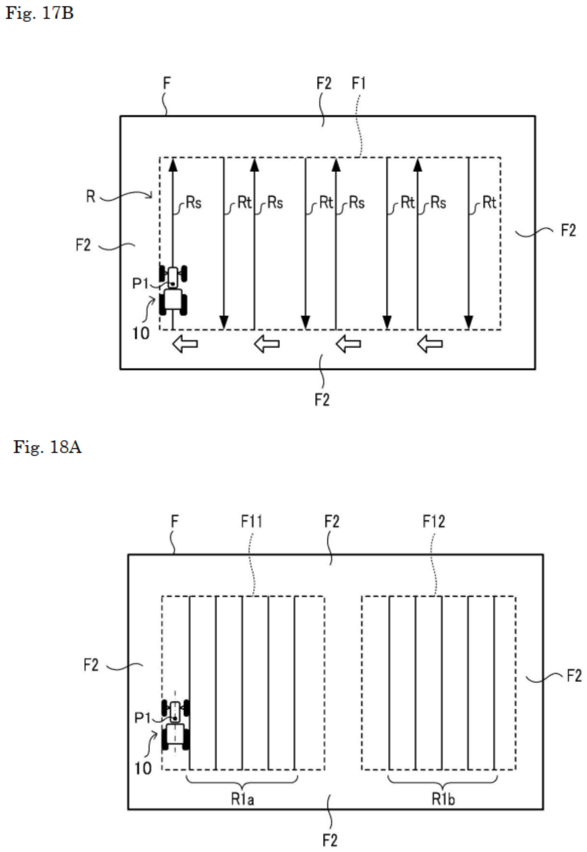

As another example, in the case where, as shown in Fig. 17A, the traveling direction changes alternately at each work path in the target path R, as shown in Fig. 17B, the correction processing unit 214 corrects the position of only work paths Rs in the same direction as the traveling direction of the work vehicle 10 when the correction operation is received, and does not correct the position of work paths Rt in a different traveling direction.

As still another embodiment, the correction processing unit 214 may correct, among the plurality of work paths R1, the position of the work path R1 that is closest to the current position P1 of the work vehicle 10 when the correction operation is received, and is associated with traveling direction information of the same direction as the traveling direction of the work vehicle 10 when the correction operation is received. That is, the correction processing unit 214 may correct the position of a specific one of the work paths R1 based on the work path R1 closest to the current position P1 of the work vehicle 10 among the work paths R1 associated with traveling direction information of the same direction as the traveling direction of the work vehicle 10 when the correction operation is received.

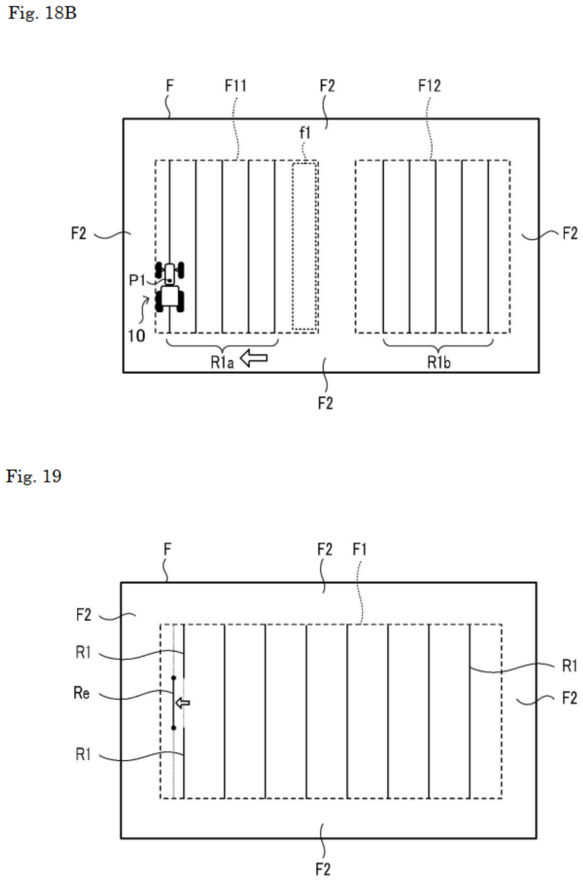

As still another embodiment, the work area F1 may include a plurality of work areas in which different target paths are generated. For example, as shown in Fig. 18A, work areas F11 and F12 may be set in the field F, a target path R1a may be set in the work area F11, and a target path R1b may be set in the work area F12. In this case, as shown in Fig. 18B, the correction processing unit 214 corrects the position of the target path R1a corresponding to the work area F11 where the work vehicle 10 is located when the correction operation is received. The correction processing unit 214 does not correct the position of the target path R1b corresponding to the work area F12 where the work vehicle 10 is not located when the correction operation is received.

In the case where the correction of the position of the target path R1a results in the generation of an unworked area f1 in the work area F11, the correction processing unit 214 may generate a work path r1 along which to cause the work vehicle 10 to travel in the unworked area f1. For example, as shown in Fig. 18B, when the unworked area f1 is generated at the right edge of the work area F11 by shifting the target path R1a to the left, the correction processing unit 214 may additionally generate one or a plurality of work paths r1 in the unworked area f1. However, the work path r1 may not need to be added, depending on the type of work. Thus, the correction processing unit 214 may determine whether or not to generate the work path r1 in the unworked area f1, based on the type of work (work information). For example, the correction processing unit 214 additionally generates the work path r1 in the unworked area f1 when the type of work is tilling work, and does not generate the work path r1 in the unworked area f1 when the type of work is ridging (when the number of ridges is predetermined).

As still another embodiment, the correction processing unit 214 may correct only the position of a partial section between the start point and end point of one of the work paths R1. For example, as shown in Fig. 19, the correction processing unit 214 may move only a partial section Re in the middle of the work path R1 by a set amount of correction. For example, in the case where the operator specifies the end point of the section and presses the path offset button K2 while the work vehicle 10 is automatically traveling along the work path R1, the correction processing unit 214 moves the section Re from the current position P1 of the work vehicle 10 to the specified end point by the set amount of correction.

The correction processing (movement processing) on the work path(s) R1 shown in Figs. 15 to 19 can also be applied to the automatic traveling system 100 that does not include the processing to set the work area F1 and the headland area F2 in the field F. That is, the correction processing unit 214 may perform the correction processing on the work path(s) R1 regardless of where the work vehicle 10 travels in the field F. Specifically, the correction processing unit 214 may correct the position of the work path(s) R1 even when a correction operation to correct the position of the work path(s) R1 is received in a state where the work vehicle 10 is located in the headland area F2. As another embodiment, the correction processing unit 214 may correct the position of the work path(s) R1 on condition that a correction operation to correct the position of the work path(s) R1 is received in a state where the work vehicle 10 is located in the work area F1.

In the configuration described above, the correction processing unit 214 is configured to move the work path R1 by the set amount of correction. As another embodiment, the correction processing unit 214 may move the position of the work path R1 to make it coincide with the current position P1 of the work vehicle 10, according to the correction operation.

As still another embodiment, the correction processing unit 214 may be configured to correct the orientation of the work path R1 to make it coincide with the current orientation of the work vehicle 10, according to the correction operation. That is, the correction processing unit 214 may correct the orientation of the target path R (shift the path angle) when a correction operation to correct the position of the target path R is received. Specifically, the correction processing unit 214 corrects the orientation of the work path R1 so that among the plurality of work paths R1 included in the target path R, the orientation of the work path R1 closest to the current position P1 of the work vehicle 10 when the correction operation is received coincides with the current orientation of the work vehicle 10. The correction processing unit 214 may correct the position and orientation of the work path R1 so that the work path R1 closest to the current position P1 of the work vehicle 10 when the correction operation is received passes through the current position P1 of the work vehicle 10, and the orientation of the work path R1 coincides with the current orientation of the work vehicle 10. The correction processing unit 214 may correct the orientation of the entire target path R, or may correct the orientation of only some of the work paths R1.

In each of the above-described embodiments, when the target path R is corrected, the correction processing unit 214 may store path data of the corrected target path R. For example, the correction processing unit 214 stores the path data of the corrected target path R associated with the field F, the type of work, and the like in the storage unit 22. This allows the operator to select the past corrected target path R to perform work at next work time.

Fig. 20 is a flowchart corresponding to an automatic traveling processing including the correction processing. In the automatic traveling processing shown in Fig. 20, processing in steps S21 and S22 is added as compared with the automatic traveling processing shown in Fig. 13, and the other processing is the same as that in the automatic traveling processing shown in Fig. 13.

When the work vehicle 10 starts automatic traveling (step S7), in subsequent step S21, the operation control unit 21 determines whether or not a correction operation (an operation of pressing the path offset button K2 on the operation screen D3 of Fig. 14) has been received while the work vehicle 10 is automatically traveling. When the correction operation has been received while the work vehicle 10 is automatically traveling (S21: Yes), the operation control unit 21 causes the process to proceed to step S22. On the other hand, when the correction operation has not been received while the work vehicle 10 is automatically traveling (S21: No), the operation control unit 21 causes the process to proceed to step S8.

In step S22, the operation control unit 21 performs the correction processing on the work path R1. Specifically, the operation control unit 21 moves the work path R1 along which the work vehicle 10 is automatically traveling by the amount of correction set by the operator (see Fig. 14). After step S22, the operation control unit 21 causes the process to proceed to step S8. In the case where the correction processing on the target path R is included, the automatic traveling system 100 performs the automatic traveling processing as described above.

### [Additional notes of the invention]

Hereinafter, an outline of the invention extracted from each of the above-described embodiments will be additionally described. Note that configurations and processing functions described in the following additional notes can be selected to be combined as desired.

### <Additional note 1>

A path generation method performed by one or a plurality of processors, the method including:
setting the shape of a field, a work area located inside the field in which a work vehicle performs work, and a headland area located inside the field and outside the work area; and
generating a target path along which to cause the work vehicle to automatically travel, based on a reference line generated according to a predetermined operation, and the work area.

### <Additional note 2>

The path generation method according to additional note 1, including
causing the work vehicle to stop automatic traveling when the work vehicle or a working unit provided to the work vehicle reaches an end of the target path set based on the work area.

### <Additional note 3>

The path generation method according to additional note 1 or 2, including
causing the work vehicle to start automatic traveling when the work vehicle or a working unit provided to the work vehicle reaches an end of the target path set based on the work area or comes within a predetermined distance from the end, and start conditions of automatic traveling are satisfied.

### <Additional note 4>

The path generation method according to additional note 3, including:
causing the work vehicle to automatically travel to the end of the target path when the work vehicle or the working unit comes within the predetermined distance; and
causing the work vehicle to start automatic traveling when the work vehicle reaches the end and the start conditions are satisfied.

### <Additional note 5>

The path generation method according to any one of additional notes 1 to 4, in which
the work area can be set to a desired extent, and
the path generation method includes setting the position of the target path according to the extent of the work area.

### <Additional note 6>

The path generation method according to additional note 5, including
setting the extent of the work area according to a user's operation.

### <Additional note 7>

The path generation method according to additional note 5 or 6, including
setting the extent of the work area, based on the size of the work vehicle or information on a working unit provided to the work vehicle.

### <Additional note 8>

The path generation method according to any one of additional notes 1 to 7, including
changing the extent of the work area, based on information of a work history with the work vehicle.

### <Additional note 9>

The path generation method according to any one of additional notes 1 to 8, including
moving the position of a specific work path when a movement operation to laterally move the position of the target path is received while the work vehicle is automatically traveling along a first work path among a plurality of parallel work paths included in the target path.

### <Additional note 10>

The path generation method according to additional note 9, including
moving only the first work path when the movement operation is received.

### <Additional note 11>

The path generation method according to additional note 9 or 10, including:
setting a plurality of the work areas inside the field;
generating the target path in each of the plurality of work areas; and
moving the position of the target path corresponding to one of the work areas in which the work vehicle is automatically traveling when the movement operation is received.

### <Additional note 12>

The path generation method according to any one of additional notes 9 to 11, including
moving the position of the work paths associated with traveling direction information of the same direction as the traveling direction of the work vehicle when the movement operation is received. In the path generation method, one or a plurality of processors perform processing according to any one of additional notes 1 to 12.

### <Additional note 13>

A path generation program for causing one or a plurality of processors to perform:
setting the shape of a field, a work area located inside the field in which a work vehicle performs work, and a headland area located inside the field and outside the work area; and
generating a target path along which to cause the work vehicle to automatically travel, based on a reference line generated according to a predetermined operation, and the work area.

### <Additional note 14>

A path generation system including:
a setting processing unit that sets the shape of a field, a work area located inside the field in which a work vehicle performs work, and a headland area located inside the field and outside the work area; and
a generation processing unit that generates a target path along which to cause the work vehicle to automatically travel, based on a reference line generated according to a predetermined operation, and the work area.

### LIST OF REFERENCE SIGNS

- 100: Automatic traveling system
- 10: Work vehicle
- 11: Vehicle control device
- 12: Storage unit
- 13: Traveling unit
- 14: Working unit
- 20: Operation terminal
- 211: Setting processing unit
- 212: Generation processing unit
- 213: Notification processing unit
- 214: Correction processing unit
- A1: Predetermined area
- F: Field
- F1: Work area
- F2: Headland area
- K1: Start button
- K2: Path offset button
- L1: Reference line
- R: Target path
- R1: Work path

## Claims

1. A path generation method comprising:
setting a shape of a field, a work area located inside the field in which a work vehicle performs work, and a headland area located inside the field and outside the work area; and
generating a target path along which to cause the work vehicle to automatically travel, based on a reference line generated according to a predetermined operation, and the work area.

2. The path generation method according to claim 1, comprising
causing the work vehicle to stop automatic traveling when the work vehicle or a working unit provided to the work vehicle reaches an end of the target path set based on the work area.

3. The path generation method according to claim 1, comprising
causing the work vehicle to start automatic traveling when the work vehicle or a working unit provided to the work vehicle reaches an end of the target path set based on the work area or comes within a predetermined distance from the end, and start conditions of automatic traveling are satisfied.

4. The path generation method according to claim 3, comprising:
causing the work vehicle to automatically travel to the end of the target path when the work vehicle or the working unit comes within the predetermined distance; and
causing the work vehicle to start automatic traveling when the work vehicle reaches the end and the start conditions are satisfied.

5. The path generation method according to claim 1, wherein
the work area can be set to a desired extent, and
the path generation method comprises setting a position of the target path according to the extent of the work area.

6. The path generation method according to claim 5, comprising
setting the extent of the work area according to a user's operation.

7. The path generation method according to claim 5, comprising
setting the extent of the work area, based on a size of the work vehicle or information on a working unit provided to the work vehicle.

8. The path generation method according to claim 1, comprising
changing an extent of the work area, based on information of a work history with the work vehicle

9. The path generation method according to any one of claims 1 to 8, comprising
moving a position of a specific work path when a movement operation to laterally move a position of the target path is received while the work vehicle is automatically traveling along a first work path among a plurality of parallel work paths included in the target path.

10. The path generation method according to claim 9, comprising
moving only the first work path when the movement operation is received.

11. The path generation method according to claim 9, comprising:
setting a plurality of the work areas inside the field;
generating the target path in each of the plurality of work areas; and
moving the position of the target path corresponding to one of the work areas in which the work vehicle is automatically traveling when the movement operation is received.

12. The path generation method according to claim 9, comprising
moving a position of the work paths associated with traveling direction information of the same direction as a traveling direction of the work vehicle when the movement operation is received.

13. A path generation program for causing one or a plurality of processors to perform:
setting a shape of a field, a work area located inside the field in which a work vehicle performs work, and a headland area located inside the field and outside the work area; and
generating a target path along which to cause the work vehicle to automatically travel, based on a reference line generated according to a predetermined operation, and the work area.

14. A path generation system comprising:
a setting processing unit that sets a shape of a field, a work area located inside the field in which a work vehicle performs work, and a headland area located inside the field and outside the work area; and
a generation processing unit that generates a target path along which to cause the work vehicle to automatically travel, based on a reference line generated according to a predetermined operation, and the work area.
